Europäisches Patentamt

European Patent Office

Office européen des brevets

(11) Veröffentlichungsnummer: **0 106 794**
**A1**

## (12) EUROPÄISCHE PATENTANMELDUNG

(21) Anmeldenummer: 83810333.1

(22) Anmeldetag: 21.07.83

(51) Int. Cl.³: **G 01 B 7/04**
**D 01 H 13/24, B 65 H 61/00**

(30) Priorität: 18.08.82 CH 4934/82

(43) Veröffentlichungstag der Anmeldung:
25.04.84 Patentblatt 84/17

(84) Benannte Vertragsstaaten:
BE DE FR IT SE

(71) Anmelder: GEBRUEDER LOEPFE AG
Kastellstrasse 10
CH-8623 Wetzikon(CH)

(72) Erfinder: Keller, Hans-Peter
Büelmattstrasse 1
D-8646 Wagen(DE)

(54) Messvorrichtung für die Längen der an den einzelnen Spulstellen einer Textilmaschine Aufgespulten Garne.

(57) Die Messvorrichtung (MV) für die Längen der an den einzelnen der n Spul- oder Spinnstellen einer Textilmaschine aufgespulten Garnlängen wirkt mit einer elektronischen Abfragevorrichtung (AV) zusammen. Diese überwacht den Fadenlauf an den genannten Stellen mit Hilfe von n Tastköpfen (M1-Mn). Die Messvorrichtung (MV) besteht aus einer Serienschaltung, die ein Schieberegister (SR) mit n Parallelausgängen, n Speicherglieder (S1-Sn), n UND-Glieder (U1-Un), n elektronische Zähler (Z1-Zn), einen Komparator (K), n elektronische Schalter (E1-En) und n Relais (R1-Rn) umfasst, sowie einen die Umdrehungen eines Antriebsorgans (W) abfühlenden Sensor (S) und einen Sollwertgeber (SG). Beim Erreichen einer in diesen (SG) eingegebenen festen Umdrehungszahl und damit einer bestimmten Garnlänge wird an der betreffenden Spul- oder Spinneinheit diese durch das zugehörige Relais (R1-Rn) stillgesetzt.

EP 0 106 794 A1

./...

Messvorrichtung für die Längen der an den einzelnen
Spulstellen einer Textilmaschine aufgespulten Garne
_____

Die Erfindung betrifft eine Messvorrichtung für die Längen
der an den einzelnen Spulstellen oder Spinnstellen einer Textilmaschine aufgespulten Garne zusammenwirkend mit einer elektronischen Abfragevorrichtung, welche auf ihren Ausgangsleitungen Signale liefert, welche für die einzelnen Spulstellen
oder Spinnstellen ein Fadenlaufsignal und am Ende eines Abfragezyklus ein Rückstellsignal und ein Einspeichersignal liefert.

In der Patentanmeldung Nr. 1 496/82 vom 11.3.1982 ist eine
elektronische Abfrageschaltung zur Ueberwachung einer Vielzahl
von Fadenlaufstellen an einer Textilmaschine beschrieben. Mit
Hilfe dieser Abfrageschaltung können die an den einzelnen Fadenlaufstellen einer Textilmaschine auftretenden Fadenbrüche
erfasst und gezählt werden.

Es ist in vielen Fällen, z.B. an automatischen Spulmaschinen
oder OE-Spinnmaschinen erwünscht, Garnwickel mit stets gleichbleibender Garnlänge herzustellen. Diesem Zweck dienende Ablängvorrichtungen, durch welche eine jede Fadenlaufstelle und
Spulstelle oder Spinnstelle nach dem Durchlauf einer bestimmten Garnlänge stillgesetzt wird, sind bekannt. Eine besonders
einfache Art der Längenmessung beruht auf der Zählung der Umdrehungen an einer Trommel oder Führungsscheibe, über die das
Garn der Aufwickelspule zugeführt wird, vergleiche die schweizerische Patentschrift Nr. 568 233, die DE-AS 23 51 463 und
die GB-PS 1 480 398. Die Garnlänge für eine Umdrehung der
Trommel oder Scheibe ergibt sich dann als Funktion des Durchmessers derselben.

Der Erfindung liegt die Aufgabe zugrunde, eine Messvorrichtung zu schaffen, mit der an einer Textilmaschine mit einer Anzahl von synchron angetriebenen Fadenlaufstellen, z.B. einer automatischen Spulmaschine oder Spinnmaschine, laufend die Länge des an jeder Fadenlaufstelle aufgewickelten Garns bestimmt und bei Erreichen einer bestimmten Garnlänge der Spulvorgang oder Spinnvorgang an der betreffenden Stelle gestoppt wird.

Diese Aufgabe wird gelöst durch eine Messvorrichtung mit den im Patentanspruch 1 gekennzeichneten Merkmalen.

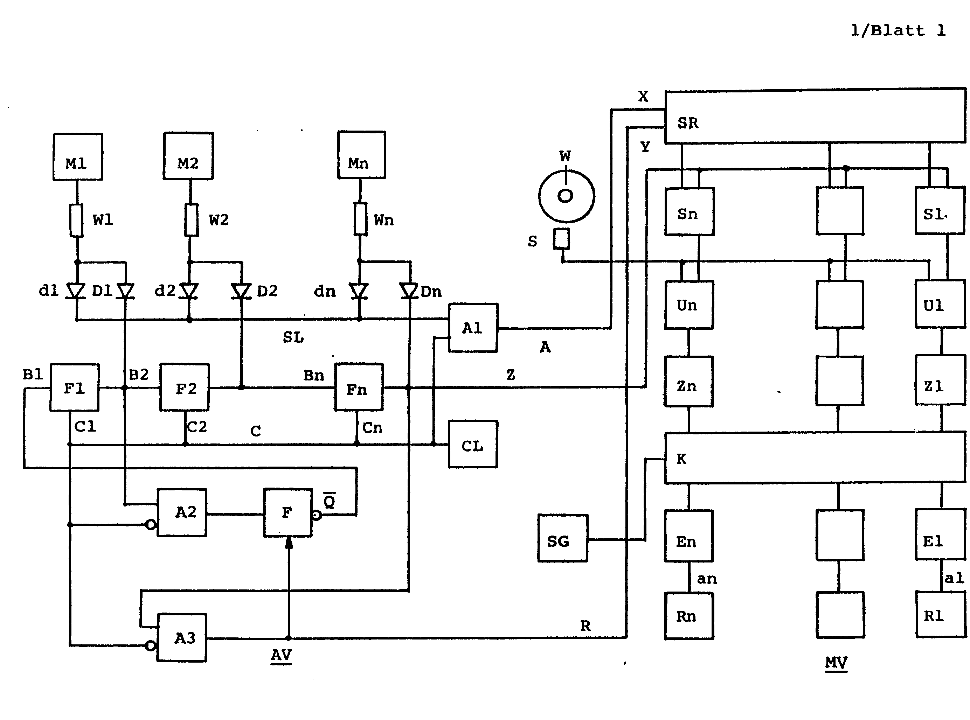

Im folgenden wird ein Ausführungsbeispiel der erfindungsgemässen Messvorrichtung anhand der Zeichnung erläutert.

Im linken Teil der Figur ist eine Abfrageschaltung dargestellt, im rechten Teil die Messvorrichtung für die an den einzelnen Spulstellen oder Spinnstellen aufgespulte Garnlänge.

Zur normalen Ausrüstung einer Spulmaschine oder OE-Spinnmaschine gehört eine Anzahl von Messköpfen, von denen hier drei Messköpfe M1, M2 und Mn abgebildet sind. Diese Messköpfe dienen zur Ueberwachung des Fadenlaufs an den Spul- oder Spinnstellen. Jeder Messkopf liefert ein Fadenlaufsignal, solange der zugehörige Faden läuft. Das Fadenlaufsignal habe einen positiven Wert bei laufendem Faden und verschwinde bei Fadenbruch oder Fadenstillstand. Durch Begrenzung wird das Fadenlaufsignal in ein duales Signal vom Wert H oder L transformiert; beispielsweise sei H=5V und L=null Volt.

An die Messköpfe M1-Mn ist eine Abfrageschaltung AV angeschlossen. Solche Abfragevorrichtungen sind in der eingangs genannten Patentanmeldung Nr. 1 496/82 beschrieben. In der Abfragevorrichtung AV ist parallel zu den Messköpfen M1-Mn eine Serienschaltung von n Flipflops F1 bis Fn vorgesehen. Der Ausgang eines jeden Messkopfs M1 bis Mn ist über einen

Widerstand W1 bis Wn und eine an diesen angeschlossene erste Diode d1 bis dn mit einer gemeinsamen Signalleitung SL und ausserdem über den genannten Widerstand und eine zweite Diode D1 bis Dn mit dem Ausgang des zugehörigen Flipflops F1 bis Fn verbunden.

Zwecks Abfragung der einzelnen Messköpfe M1 bis Mn ist ein Taktgeber CL vorgesehen, der über eine Clockleitung C die Takteingänge C1 bis Cn der Flipflops F1 bis Fn ansteuert. Vorzugsweise liefert der Taktgeber CL Impulse einer hohen Folgefrequenz im Bereich von mehreren kHz, zum Beispiel 10 kHz; es kann aber auch sehr langsam, beispielsweise mit 10 Hz gearbeitet werden.

Ein erstes UND-Glied A1 bildet die Endstufe der Abfrageschaltung. Der eine Eingang des UND-Glieds A1 ist mit der Signalleitung SL, der andere Eingang mit der Clockleitung C verbunden. Die Ausgangsleitung oder Anzeigeleitung des ersten UND-Glieds A1 ist mit A bezeichnet.

Ein zweites UND-Glied A2 mit einem negierten Eingang und ein mit diesem UND-Glied A2 in Serie geschaltetes Flipflop mit negiertem Ausgang $\overline{Q}$ bilden eine Startschaltung. Ferner ist ein Rückstell-UND-Glied A3 mit einem negierten Eingang vorgesehen.

Die negierten Eingänge der UND-Glieder A2 und A3 sind an die Clockleitung C angeschlossen. Der andere Ausgang des UND-Glieds A2 bzw. A3 ist mit dem Ausgang des ersten Flipflops F1 bzw. des n-ten Flipflops Fn verbunden. Der negierte Ausgang $\overline{Q}$ des Flipflops F steuert den Dateneingang B1 des ersten Flipflops F1 an, während der Ausgang des Rückstell-UND-Glieds A3 mit dem Rückstelleingang des Flipflops F verbunden ist. Die Ausgangsleitung des Rückstell-UND-Glieds A3 wird als Rückstellleitung R bezeichnet.

Die Messvorrichtung MV umfasst einen mit der Antriebswelle W der Spulstellen zusammenwirkenden Umdrehungssensor S, ein Schieberegister SR mit n Ausgängen, n Speicherglieder S1 bis Sn, n UND-Glieder U1 bis Un, n Zähler Z1 bis Zn, einen Sollwertgeber SG und Komparator K, n elektronische Schalter E1 bis En und n Relais R1 bis Rn. Die Ausgangsleitungen a1 bis an verbinden die elektronischen Schalter E1 bis En mit den Relais R1 bis Rn.

Das Schieberegister SR hat einen Dateneingang X und einen Rückstelleingang Y. Der Dateneingang X ist mit der Anzeigeleitung A der Abfragevorrichtung AV verbunden, der Rückstelleingang Y mit der Rückstelleitung R. Jedes der n Speicherglieder S1 bis Sn hat zwei Eingänge, deren erster an die Ausgangsleitung Z des letzten Flipflops Fn angeschlossen ist und deren zweiter mit dem ihm zugeordneten Ausgang des Schieberegisters SR verbunden ist. Jedes der UND-Glieder U1 bis Un ist mit seinem ersten Eingang an den Umdrehungssensor S und mit seinem zweiten Eingang an den Ausgang des ihm zugeordneten Speicherglieds S1 bis Sn angeschlossen.

Die Ausgangsleitung eines jeden UND-Glieds U1 bis Un führt zum Eingang eines Zählers Z1 bis Zn, dessen Ausgang mit einem der n Messeingänge des Komparators K verbunden ist. Ein Sollwerteingang des Komparators K ist an einen Sollwertgeber SG angeschlossen. Jeder der n Ausgänge des Komparators K ist an einen der elektronischen Schalter E1 bis En angeschlossen, der im Stromkreis eines der Relais R1 bis Rn liegt.

Die Funktion der Messvorrichtung MV, wenn wenigstens an einem Teil der Messköpfe M1 bis Mn ein Faden läuft, ist wie folgt. Während eines Abfragezyklus der Messköpfe M1 bis Mn bzw. der Flipflops F1 bis Fn wird eine Folge von n dualen Signalen (1) oder (0) in das Schieberegister SR in umgekehrter Reihenfolge

eingegeben, wobei die (1)-Signale jeweils einen laufenden Faden am betreffenden Messkopf anzeigen. Am Ende des Abfragezyklus erscheint auf der Ausgangsleitung Z ein Impuls, durch den diejenigen der Speicher S1 bis Sn auf (1) gesetzt werden, an denen ein (1)-Signal aus dem entsprechenden Ausgang des Schieberegisters SR anliegt.

Die UND-Glieder U1 bis Un geben dann bei jeder Umdrehung der Antriebswelle W einen Impuls an jeden der Zähler Z1 bis Zn, deren zugehöriger Speicher einen laufenden Faden anzeigt, so dass der Stand eines jeden dieser Zähler jederzeit die Zahl der Umdrehungen wiedergibt, solange der zugehörige Faden läuft. Der Komparator K vergleicht den Stand eines jeden Zählers Z1 bis Zn mit dem im Sollwertgeber SG eingestellten Wert, zum Beispiel 100 000. Sobald in einem der Zähler dieser Sollwert erreicht ist, wird vermittels des zugehörigen der elektronischen Schalter E1 bis En das entsprechende Relais R1 bis Rn betätigt. Dadurch wird die betreffende Fadenlaufstelle am zugehörigen der Messköpfe M1 bis Mn stillgesetzt und der Wechsel der zugehörigen vollen Spule gegen eine leere Hülse veranlasst.

Es kann weiter eine Datenverarbeitungsanlage an die Messvorrichtung angeschlossen sein, die registriert, wann und an welcher Fadenlaufstelle eine Spule gewechselt worden ist.

Die Messvorrichtung MV kann mit Ausnahme des Sensors S und der Relais R1 bis Rn durch einen Mikroprozessor mit den Eingangsleitungen R,X,Y und den Ausgabeleitungen a1-an realisiert werden.

18.8.1982
La-bu

GEBRUEDER LOEPFE AG, WETZIKON (SCHWEIZ)

Patentansprüche

1. Messvorrichtung für die Längen der an den einzelnen Spulstellen oder Spinnstellen einer Textilmaschine aufgespulten Garnlängen, zusammenwirkend mit einer elektronischen Abfragevorrichtung (AV), welche auf ihren Ausgangsleitungen (A,R,Z) Signale liefert, welche für die einzelnen Spulstellen oder Spinnstellen ein Fadenlaufsignal (A) und am Ende eines Abfragezyklus ein Rückstellsignal (R) und ein Einspeichersignal (Z) liefern, dadurch gekennzeichnet, dass die Messvorrichtung (MV)

-ein Schieberegister (R) mit n Parallelausgängen und zwei Eingängen (X,Y), welche an die Ausgangsleitung (A) für die n Fadenlaufsignale bzw. an die Ausgangsleitung (R) für die Rückstellsignale angeschlossen sind,

-n Speicherglieder (Sl-Sn) mit je zwei Eingängen, deren erster mit der Einspeicherleitung (Z) und deren zweiter mit einem der n Paralleleingänge verbunden ist,

-n UND-Glieder (Ul-Un) mit je zwei Eingängen, deren erster an einen die Umdrehungen einer Antriebswelle (W) aller Spulstellen anzeigenden Umdrehungssensor (S) und deren zweiter an das zugehörige UND-Glied angeschlossen ist,

-n elektronische Zähler (Zl-Zn), deren jeder an das zugehörige Speicherglied (Ul-Un) angeschlossen ist,

-einen Komparator (K), dessen einer Sollwerteingang mit einem Sollwertgeber (SG) und dessen n Messeingänge je mit einem der elektronischen Zähler (Zl-Zn) verbunden sind, und

n Relais (Rl-Rn), deren jedes vermittels eines an den Komparator (K) angeschlossenen elektronischen Schalters (El-En) betätigbar ist, umfasst.

2. Messvorrichtung nach Anspruch 1, dadurch gekennzeichnet, dass sie mit Ausnahme der Relais (Rl-Rn) durch einen Mikroprozessor verwirklicht ist.

1/Blatt 1

Europäisches
Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 460 252 (W. SCHLAFHORST & CO.) <br> * Ansprüche * <br> --- | | G 01 B 7/04 <br> D 01 H 13/24 <br> B 65 H 61/00 |
| A | DE-A-2 502 553 (ZINSER-TEXTILMASCHINEN GMBH) <br> * Ansprüche * <br> --- | | |
| A | DE-A-2 525 545 (O. STÜBER KG) <br><br> * Ansprüche * <br> --- | | |
| A | DE-A-2 917 507 (ELITEX) <br><br> * Anspruch * <br> --- | | |
| D,A | CH-A- 568 233 (NIPPON SEREN CO.) <br> & DE-B2-2 351 463 (Cat. D,A) <br> --- | | RECHERCHIERTE SACHGEBIETE (Int. Cl. ³) |
| D,A | GB-A-1 480 398 (NUOVA SAN GIORGIO) <br><br><br> ----- | | G 01 B 7/04 <br> D 01 H 13/24 <br> B 65 H 61/00 |

Der vorliegende Recherchenbericht wurde für alle Patentansprüche erstellt.

| Recherchenort | Abschlußdatum der Recherche | Prüfer |
|---|---|---|
| BERLIN | 17-11-1983 | KOEHN G |